Europäisches Patentamt

(19) European Patent Office

Office européen des brevets

(11) EP 0 708 550 A2

(12) EUROPEAN PATENT APPLICATION

(43) Date of publication:
24.04.1996 Bulletin 1996/17

(51) Int. Cl.⁶: $H04N\ 1/40$, $B41J\ 2/475$

(21) Application number: 95115868.2

(22) Date of filing: 09.10.1995

(84) Designated Contracting States:
DE FR GB IT

(30) Priority: 18.10.1994 US 324728

(71) Applicant: MINNESOTA MINING AND
MANUFACTURING COMPANY
St. Paul, Minnesota 55133-3427 (US)

(72) Inventor: Bills, Richard E.,
c/o Minnesota Mining and
Saint Paul, Minnesota 55133-3427 (US)

(74) Representative: Hilleringmann, Jochen, Dipl.-Ing.
et al
Patentanwälte
von Kreisler-Selting-Werner,
Bahnhofsvorplatz 1 (Deichmannhaus)
D-50667 Köln (DE)

(54) **Ablation-transfer-imaging using zero order laser beams in a flat-field scanner**

(57) The present invention provides an apparatus for ablation-transfer imaging of ablatable medium. The apparatus comprises a continuous-wave solid state laser for emitting a continuous laser beam, a modulator for attenuating the intensity of the laser beam passing undiffracted through the modulator so that an undiffracted (zero order) beam is continuously emitted from the modulator, and a scanner. The undiffracted beam is attenuated in intensity when the modulator is in a first mode of operation and the undiffracted beam is unattenuated in intensity when the modulator is in a second mode of operation. The scanner is adapted for scanning the undiffracted beam from the modulator across the medium in a substantially straight path at a varying linear speed to produce a track pattern of desired ablated track thereon.

FIG. 1

EP 0 708 550 A2

**Description**

FIELD OF THE INVENTION

This invention relates to an apparatus and method for recording an image on a medium using a laser to induce ablation on at least part of the medium.

BACKGROUND OF THE INVENTION

Photosensitive laser-addressable films are currently used in the graphic arts industry as ultraviolet masks for the production of imaged photopolymer lithographic printing plates. Conventional graphic arts imagesetting films contain photosensitive silver halide emulsions sensitive to a laser emission wavelength. The desired digital pattern or image is recorded on the film by scanning a modulated laser spot across the medium in a sequentially scanned fashion to expose the film to laser light. The quality of the image produced by the imagesetting scanner on the film is dependent on the nature of the exposure process. For photosensitive films, the contrast of the image depends significantly on the ability of the laser scanning system to shut off completely, block, or divert the laser light so as not to expose to it the portion of the medium on which no image is desired. Special care must be taken to protect such a medium from inadvertent exposure to laser or extraneous light. Imagesetting scanners are commercially available for use with such media and are well known in the art.

Unfortunately, the photosensitive films used in these imagesetters require the use of environmentally harmful processing chemicals. Generally, such a film is used to image a printing plate by placing a precoated aluminum plate in vacuum contact with the exposed/imaged film and exposing the plate through the mask film with UV radiation. Typically, the photopolymer plate is processed after exposure by chemically washing away the exposed or unexposed polymer. The liquid chemical products used in this wash-off step can be environmentally harmful. In addition, this processing step adds cost, complexity, and time to the overall production of lithographic printing plates.

After washing, the plate is then mounted on a printing press for printing the image on paper. Additionally, the films are frequently proofed before they are contact-exposed to printing plates. This is accomplished by contact-exposing the film mask with a precoated donor-receptor material to transfer the colors from the donor to the receptor to produce a color proof (e.g., 3M Matchprint III™).

Recently, laser-induced thermal transfer of material from a donor to a receptor medium has been used to produce halftone color proofs, films, and printing plates. This process is simple and does not require wet processing techniques. Examples of such media are described in U.S. Patent No. 5,126,760 (DeBoer), U.S. Patent No. 5,278,023 (Bills et al.), U.S. Patent No. 5,308,737 (Bills et al.), U.S. Patent No. 5,256,506 (Ellis et al.), U.S. Patent No. 3,978,247 (Braudy et al.), U.S. Patent No. 4,702,958 (Itoh et al.), U.S. Patent No. 4,588,674 (Stewart et al.), and U.S. Patent No. 3,787,210 (Roberts). The utility of these media has been recognized for a long time in the literature (e.g., Myers, W.C., "Laser Micrographic Recording on Non-silver Halide Organic-based Media," SPSE Symposium III, Unconventional Photographic Systems, Oct. 1971).

Some laser-induced thermal transfer materials have a threshold level of energy absorption below which ablation (or propulsion) of material from the donor will not occur. See, for example, U.S. Patent No. 5,256,506 and the reference by Myers. To image on a laser-ablatable medium, a high power laser (spot peak intensity greater than about $10^5$ W/cm$^2$) is focused on and scanned across a donor sheet of a suitable laser-ablatable material. When the absorbed energy exceeds the threshold level on a portion of the donor sheet, the laser-ablatable material on that portion is ablated (or propelled) from the donor sheet to a receptor placed adjacent to the donor sheet. Unless the exposure energy per unit area incident at a point under the scanned beam exceeds the threshold level, no material will be removed from the donor sheet.

Multiple beam high power laser scanning systems have been developed to expose these media. These scanners utilize high power AlGaAs laser diode arrays that emit in the 780-860 nm wavelength range. Examples of these scanners can be found in U.S. Patent No. 4,743,091 (Gelbart), U.S. Patent No. 5,309,178 (Gross), and WO 92/16374 (Ferschl et al.). Unfortunately, these systems are very costly and are susceptible to banding artifacts due to their array design approach.

An example of an ablation-transfer-imaging system is described in Lee, I.Y.S., Tolbert, W.A., and Dlott, D.D., Journal of Imaging Science and Technology, 36(2), 180-187 (1992). In this system, diffracted laser light (first order light) from an acousto-optical modulator (or "A/O modulator") is used to cause ablation. An example of a commercial ablation-transfer-imaging is described by R.M. Landsman in the "The LogEscan Laser Platemaking System," Proc. TAGA, 1977, and in "Design and Use of Thermal Imaging Systems for the Graphic Arts," SPIE Vol. 169, Laser Printing (1979). This ablation-transfer system is also described in U.S. Patent No. 3,739,088. Such a system utilizes a water-cooled solid state Nd:YAG laser that is focused to a 25 micron spot and scanned to form lines of 25 microns in width. Other examples of laser addressed ablation-transfer-imaging systems include those described in U.S. Patent No. 5,212,500 (Harrigan et al.), U.S. Patent No. 5,126,760 (DeBoer), and U.S. Patent No. 5,159,352 (Ferla et al.).

However, the reliability of water-cooled Nd:YAG lasers is not well suited for graphic arts laser scanners. More reliable diode-pumped Nd:YAG and Nd:YLF lasers have been developed recently and are suitable for the exposure of ablative media. These lasers are well suited for medium format (e.g., 11 x 17 inches) single beam scanning systems, as will be evident in this invention.

## SUMMARY OF THE INVENTION

The present invention provides an apparatus for ablation-transfer-imaging (ATI) of an ATI medium comprising an ablatable layer on a substrate, the ablatable layer having an exposure threshold for ablation. The apparatus used with this ATI medium comprises a continuous-wave solid state laser for emitting a continuous laser beam, a modulator for attenuating the intensity of the laser beam passing undiffracted (zero order) through the modulator to produce or emit therefrom an undiffracted beam (zero order) of attenuated intensity when the modulator is in a first (or attenuating) mode of operation (for example, when the modulator is activated) and an undiffracted beam of unattenuated intensity when the modulator is in a second (or nonattenuating) mode of operation (for example, when the modulator is unactivated). In this way, an undiffracted beam is continuously emitted from the modulator. The apparatus further comprises a scanner adapted to scan the undiffracted beam from the modulator across the ATI medium in a straight path (or line) at a varying linear speed to produce a desired track pattern on the ATI medium.

The apparatus of the present invention is adapted to expose laser-ablatable (or simply "ablatable" hereinafter) imaging materials to produce a high rate of desired track formation with efficient use of the laser energy. This is accomplished by scanning a laser beam having a generally Gaussian intensity distribution (or "Gaussian beam" hereinafter) on an ATI medium at a speed such that the width of the ablated track on the ATI medium is about equal to the $1/e^2$ radius. The $1/e^2$ radius is half of the $1/e^2$ diameter, which is the diameter of a circle around the center (which has peak laser light intensity) of a Gaussian laser beam spot on the medium, wherein at the perimeter of the circle the laser light intensity is at $1/e^2$ the intensity of the peak intensity of the beam.

The apparatus of the present invention has features that promote the efficient use of laser energy. Efficient use of laser energy (so that lower power lasers can be used) is important for digitally-addressed laser imaging because of the structural complexity and cost of high power lasers. The apparatus can be adapted to scan at a speed that allows the efficient use of laser energy. In another aspect, using the zero order laser beam results in the utilization of substantially all of the available laser power for imaging, at least in the center of a scan, if a resonant galvanometer is used for scanning the zero order beam. This further contributes to the efficient use of laser energy. In one embodiment, an air-cooled laser can be used, which is structurally simpler and less expensive than water-cooled lasers. In another embodiment, galvanometers are used in the apparatus of the present invention to scan the laser beam on a medium (e.g., an ATI medium). Such galvanometers, especially resonant galvanometers, are simpler to use and less expensive than polygon mirror systems. Similarly, A/O modulators employed in the present invention are simpler to use for attenuating the laser beam and less expensive than electro-optical modulators.

Because of the relatively low contrast ratio (i.e., the ratio of the intensity of the unattenuated zero order beam to that of the attenuated zero order beam) of A/O modulators compared to electro-optical modulators ("E/O modulators"), the use of a zero order beam for imaging can result in undesirable ablations. To overcome this problem, the apparatus of this invention can be adapted to scan, with the appropriate contrast ratio, such that the edge of the ablated track is exposed to a laser beam intensity of about 60% of the peak laser beam intensity at the center of the laser beam spot. The apparatus permits efficient use of laser energy and prevents the formation of undesirable ablation between the desired ablated tracks.

The stability of the position of the scanning laser beam is further increased by the use a galvanometer oscillating in a sinusoidal manner. The use of such a sinusoidally oscillating galvanometer is accomplished in the present invention by adapting the modulator so that the intensity of the laser beam scanning onto an ATI medium is modulated to correspond to the sinusoidal variation of the position of the laser beam to form a uniform ablated track of uniform width.

The present invention also provides a method for ablation-transfer-imaging an ATI medium having an exposure threshold of ablation on a flat field. The method comprises continuously emitting a laser beam, modulating the laser beam to result in a continuous undiffracted (zero order) beam of varying intensity, and directing and scanning the continuous undiffracted beam across the ATI medium at a varying linear speed to produce a desired track pattern on the ATI medium. The intensity of the undiffracted beam in the present method can be attenuated in a first (or attenuating) mode of modulation (for example, when an A/O modulator is activated) and unattenuated at a second (or nonattenuating) mode of modulation (for example, when an A/O modulator is unactivated) such that an undiffracted beam continuously results. As used herein, the term "flat field" includes a surface that is flat or the straight, longitudinal side of a drum (or cylinder) defined by the lines parallel to the axis of the drum of a fixed distance from the axis as long as the laser beam, when illuminating the medium, forms a spot thereon and the spot traces a straight (i.e., linear) path (parallel to the lines defining the drum) as it is moved across that surface or side of the drum in a scan.

The apparatus of the present invention can utilize structurally simpler and less expensive components than the prior art systems and can be more efficient in laser energy use. It can reduce the time needed to produce a halftone image, improve ablation track repeatability, and increase resolution for a given laser spot size and depth of focus. The apparatus and method of the present invention can be advantageously utilized in many applications such as halftone printing, obtaining digital color proofs in graphic arts by halftone recording, and direct printing plate imaging. In each case, no liquid chemicals are needed in the process. For example, a dot in halftone printing can result by ablating the medium to create adjacent tracks to form an image of a dot. Images of various dimensions can also be recorded on an appropriate ablatable medium by forming patterns of ablated tracks of various lengths.

BRIEF DESCRIPTION OF THE DRAWING

Referring to the accompanying drawing, wherein the figures are not drawn to scale in order to show certain details and wherein like reference numerals represent like corresponding parts in the several views in which:

FIG. 1 is a schematic representation of an embodiment of the apparatus of the present invention;

FIG. 2 shows a graphical representation of the intensity of a laser beam spot that was scanned onto an ablative medium in the preferred embodiment of FIG. 1;

FIG. 3 is a graphical representation of the relationship of the voltage applied to the A/O modulator to the time of scan in a scan utilizing the embodiment of the apparatus of FIG. 1;

FIG. 4 is a schematic representation of an alternative embodiment of the apparatus of the present invention;

FIG. 5 is a graphical representation of the dwell time versus peak threshold intensity (i.e., the peak intensity incident on the medium along the edge of the imaged scan track) for an ablative medium comparing data obtained from the embodiment of FIG. 4 to a theoretical curve; and

FIG. 6 is a graphical presentation of area coverage rates versus scan speed, comparing data obtained from using the embodiment of FIG. 4 with a theoretical curve.

DETAILED DESCRIPTION OF THE PREFERRED EMBODIMENTS

The present invention provides an apparatus for recording by efficiently ablating materials using a laser so that a high rate of ablation is produced. The apparatus of the present invention can be made by using conventional, commercially available components.

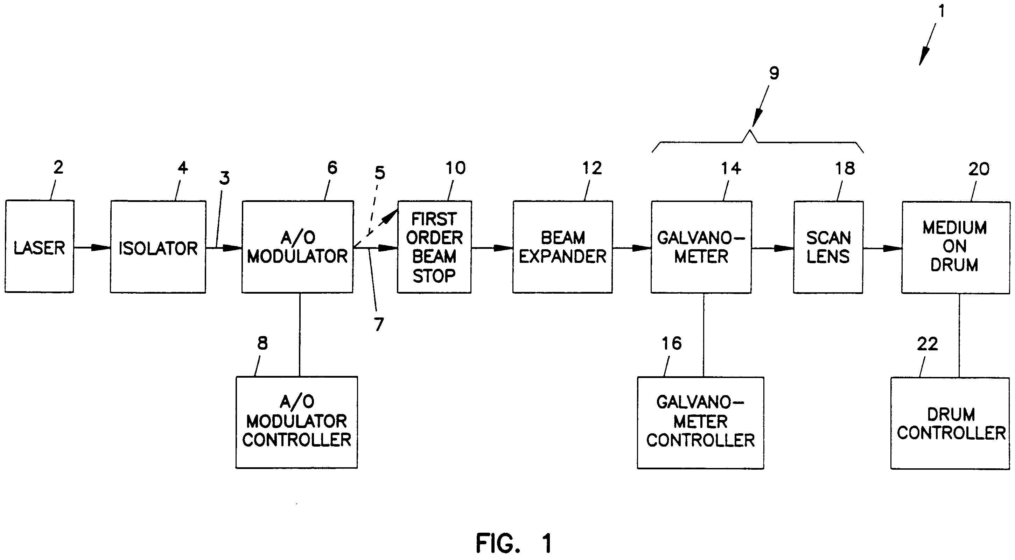

Referring to FIG. 1, the preferred embodiment of the apparatus 1 of the present invention comprises a laser 2 of a specified power which delivers a beam 3 of coherent light to an acousto-optical modulator 6 (the path of the laser beam through the apparatus is shown by arrowed lines connecting the components in FIG. 1). An undiffracted beam 7 emitting from the acousto-optical modulator 6 is focused by a scanner (or scanning system) 9 that scans the undiffracted beam across a medium 20 in a straight line.

The laser 2 is preferably a high power (with power of more than 1 W), continuous wave laser. Examples of suitable lasers are Nd:YAG, Nd:YLF, Nd:YVO$_4$, and other solid state lasers. Another example of a laser applicable for small format size (e.g., A4 format, 21cm x 30cm) is a MOPA (Master Oscillator-Power Amplifier) diode laser. It is also preferred that the laser has a good TEM$_{oo}$ mode (lowest order transverse electromagnetic mode, with Gaussian spatial intensity shape in both directions across the spot) beam quality and stable power. To increase the rate of ablated track formation, it is desirable to utilize lasers of higher power, (e.g., lasers of CW power higher than 7 W).

However, because higher power lasers generally produce more heat and cooling systems add complexity to the apparatuses and are expensive, lasers that do not need water-cooling are preferred. Thus, the laser-diode pumped lasers which are air-cooled are more preferable. In the preferred embodiment of Fig. 1, the laser 2 is a 4 W Nd:YLF laser-diode pumped laser (such as that manufactured by SPECTRA-PHYSICS™).

The laser beam emitted from the laser 2 is preferably passed through an isolator 4 (e.g., OPTICS FOR RESEARCH™, IO-5-YAG) before entering the acousto-optical modulator 6. The isolator 4 prevents back reflection from entering the laser cavity since such back reflection, if present, would disturb the stability of the laser mode operation.

The modulator 6 is used to attenuate the laser beam so that an undiffracted beam can be scanned across the ATI medium with varying intensity. During the first mode of operation of the modulator, the modulator is actuated to result in an undiffracted beam of attenuated intensity emitting therefrom. During the second mode of operation of the modulator, the laser beam entering the modulator is substantially unattenuated in that it and the undiffracted beam emitting from the modulator have substantially the same intensity (i.e., with less than 6% attenuation).

In operation, the modulator can be controlled to operate in the first mode and second mode as a continuum. For example, in a scan to create an ablated track, the modulator can be unactivated to allow maximal transmission of undiffracted light at mid-scan. As the scanner scans away from the mid-scan position towards the edge of the medium, the modulator is activated and controlled to progressively diffract more and more light to result in less and less zero order beam being transmitted through the modulator. In this way, an ablated track of uniform width can be produced. Further, to ablate the medium in a scan to produce pixels with a gap (or space) between any two adjacent pixels, the modulator can be fully activated to minimize the amount of light energy impinging on the medium when the undiffracted beam is directed to positions corresponding to the gaps (or spaces) between the pixels.

Modulators such as electro-optical (E/O) modulators (e.g., CONOPTICS™ Model 361-80) can be used in the present invention. Such an E/O modulator can provide 85% transmission efficiency in that it can allow 85% of the incoming light to pass through as unattenuated light. This type of modulator can have a contrast ratio of about 100:1 in that the unattenuated beam emitting from it can be attenuated 99% in the attenuating (first) mode of operation compared to the nonattenuating (second) mode of operation. Such E/O modulators, because of their high contrast ratio, can easily be controlled so that undesirable ablation from excessive exposure in the first (i.e., attenuating the undiffracted beam) mode of operation does not occur.

Although electro-optical modulators can be used in the present invention, the preferred modulator is an acousto-optical modulator (A/O modulator) because of its relatively simple construction, relatively low cost, and its ability to transmit a high percentage of the incoming light as undiffracted light. Acousto-optical modulation is a method for varying the optical intensity of light (which is a laser beam in the present preferred embodiment) using an electrical signal. Acousto-optical modulation is discussed by E.I. Gordon in IEEE Proceedings, 54(10), Oct. 1966.

The acousto-optical modulator most applicable in the present invention includes a glass substrate on which a piezo-electric transducer is mounted. The transmission of radio frequency (RF) power to the transducer results in the propagation of acoustic waves through the glass. When a light beam is passed through the glass in a direction perpendicular to the direction of propagation of the acoustic waves, part of the light beam is diffracted at an angle (the Bragg angle), resulting in a diffracted beam (the first order beam) and an undiffracted beam (the zero order beam) from the acousto-optical modulator.

Although A/O modulators of various quality can be used in the present invention, typically the A/O modulator applicable in the present invention, when unactivated (i.e., turned off during the second mode of operation), allows substantially all (typically more than about 95%, preferably more than about 98%) of the laser beam incident thereon to pass through as the undiffracted (zero order) beam. Therefore, only an insignificant amount of the incoming light is absorbed or diffracted by the unactivated A/O modulator. This allows a large fraction of energy of the laser to be utilized for ablation-transfer-imaging of an ablatable ATI medium, thereby resulting in a high scan speed.

When the A/O modulator is activated, resulting in part of the laser beam being diffracted, the intensity of the zero order beam is attenuated compared to the zero order beam when the modulator is unactivated. The A/O modulator can be controlled to provide various degrees of attenuation of the zero order beam. Preferably, the A/O modulator applicable in the present invention, when activated for maximal attenuation of the undiffracted beam, results in diffraction of more than about 50%, more preferably more than about 60%, and even more preferably more than 70% (e.g., 80%) of the zero order beam that is present when the modulator is unactivated. However, because A/O modulators with higher contrast ratios are more difficult to fabricate, modulating the zero order beam so that the intensity of the maximally attenuated beam has about 20% to 50% the intensity of the unattenuated bean, is practicable for scanning the ATI medium at an optimal speed corresponding to the optimal area coverage rate (discussed below). In this case, 50% to 80% of the beam is diffracted during maximal attenuation. Examples of applicable A/O modulators include, but are not limited to, ISOMET 1201E-2 (ISOMET CORPORATION™), AOM-60.8R (INTRA ACTION CORP.™), and AOMO 3200-122 (CRYSTAL TECHNOLOGY, INC.™).

The modulator, preferably, A/O modulator, is controlled by a modulator controller 8. The A/O modulator 6 of FIG. 1 is controlled by an A/O driver (not shown) which is interfaced by a computer system that controls the activation of modulation and the intensity variation of the transmitted zero order beam. The modulation of the zero order beam is controlled so that when the zero order beam is scanned onto an ATI medium along a straight path (or line) on a flat field (e.g., a straight line on a flat surface), an ablated track of uniform width can be produced. The electronics circuitry for controlling an A/O modulator is known in the art. Because ablation is caused by the absorption of energy over a threshold level and the scan speed of the laser beam on the ATI medium is not uniform along the straight path, to produce an ablated track of a uniform width, the intensity of the zero order beam and the time of exposure of the ATI medium to the beam has to be varied. Thus, the A/O modulator is controlled based on parameters including the scan speed of the laser beam spot, the intensity of the unattenuated zero order beam, and the angle of incidence on the medium versus time.

In FIG. 1, the A/O modulator is adapted so that the Gaussian laser beam is scanned across (i.e., incident on and passed over) an ATI medium at a speed and intensity such that the width of the ablated track on the medium is about equal to the $1/e^2$ radius. As previously stated, the laser beam of the present invention preferably has a $TEM_{oo}$ Gaussian intensity distribution.

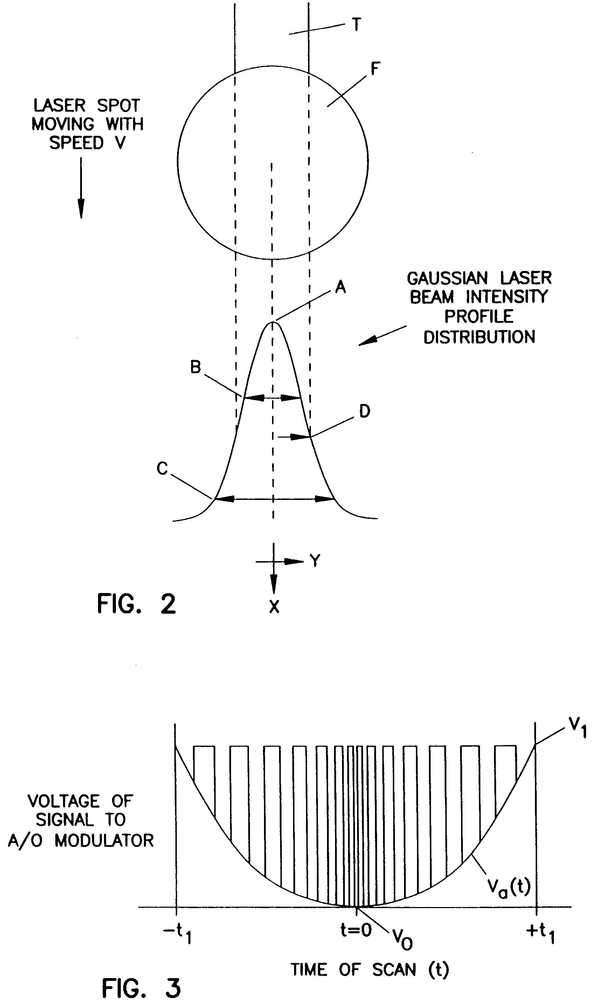

Referring now to FIG. 2, the scanning of the beam onto the surface of an ATI medium results in a laser bean, spot F thereon. The intensity profile (graphically represented by the Gaussian curve CBAD) of the laser beam spot F has a peak at A, a $1/e^2$ diameter at C, and the diameter at B is equal to the $1/e^2$ radius. The peak light intensity at the edge of the track T is D.

When the energy absorbed by the ATI medium on a particular portion of the medium exceeds the threshold level, ablation of the medium occurs, resulting in an ablation track T of width $2y_T$ as the beam is scanned across the ATI medium. The intensity profile I of a focused Gaussian laser beam spot scanning with velocity v is:

$$I(x,y,t)=\frac{2P}{\pi\omega_x\omega_y}\exp[\frac{-2y^2}{\omega_y^2}]\exp[\frac{-2(x-vt)^2}{\omega_x^2}]\qquad(1)$$

where P is the laser power at the image plane (W); $\omega_x$ is the $I/e^2$ laser spot radius in the x (in-scan) direction (cm) (i.e., half of the $I/e^2$ diameter, wherein the $1/e_2$ diameter results in a circle whose perimeter has an intensity of $1/e^2$ that of the peak at the center); $\omega_y$ is the $I/e^2$ laser beam spot radius in the y (cross-scan direction (cm); wherein x and y are the in-scan (i.e., along the scanning path) and cross-scan (i.e., perpendicular to the scanning path) position coordinates respectively, and t is the time variable. As the laser beam is scanned across the ATI medium, an imaged track of width $2y_T$ is produced as long as the threshold energy level is exceeded somewhere within the path of the scanned spot. Along the laser beam spot scan path, the medium is illuminated with a Gaussian temporal intensity pulse in the y direction as the laser spot scans over the material.

At $\pm y_T$, the peak (as a function of time because of the temporal pulse nature of exposure) intensity $I_T$ incident on the media is given by

$$I_T=2\frac{P}{\pi\omega_x\omega_y}\exp[-2\frac{y_T^2}{\omega_y^2}]\qquad(2)$$

which defines the peak threshold intensity of the medium. The temporal pulse shape is determined by the last exponential term in Equation (1). The full width at half maximum (FWHM) temporal Gaussian pulse width (which is the width of the temporal pulse width at which the intensity is half that of the peak intensity of the temporal pulse and having time as a unit) can be calculated from this term, and is given by

$$\Delta t_{FWHM}=\frac{\omega_x}{v}\sqrt{2\ln 2}.\qquad(3)$$

The threshold exposure energy at the edges of the ablation track can be computed from the integral

$$E_T=\int_{-\infty}^{\infty}I_T\exp[\frac{-2(vt)^2}{\omega_x^2}]dt.\qquad(4)$$

Note that the threshold exposure energy, $E_T$, is not the same as the total weighted average exposure energy, $E_{avg}$, which is often quoted in the literature. $E_{avg}$, which is larger than $E_T$, is usually calculated as $E_{avg}=P/ACR$, where ACR is the area coverage rate defined below. Combining Equations (3) and (4) and integrating, it can be shown that

$$E_T=\sqrt{\frac{\pi}{4\ln 2}}I_T\Delta t_{FWHM}=1.0645I_T\Delta t_{FWHM}.\qquad(5)$$

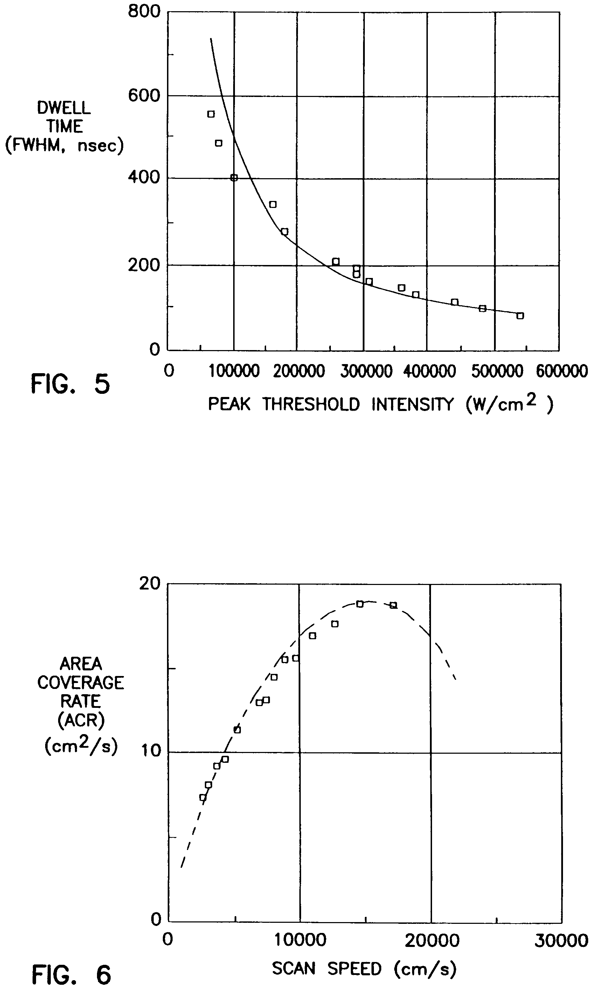

A plot of $\Delta t_{FWHM}$ versus $I_T$ for constant $E_T$ is shown in FIG. 5. The region lying above the curve represents exposure energies that exceed the threshold energy level, and is defined as the imaging region. Dwell times and peak intensities lying below the curve will not produce an image.

Assuming that $E_T$ is only weakly dependent on $I_T$ and $\omega_y$ for a given P, the area coverage rate (ACR) can be calculated in closed form when P, $\omega_y$, $E_T$, and v are given. The value of v that maximizes the ACR ($v_{opt}$) can also be calculated, as shown below.

The ACR is the product of the imaged/ablated line width and the scan velocity, and is given by,

$$ACR=2y_Tv=2v\sqrt{\frac{\omega_y^2}{2}\ln[\frac{2P}{\pi I_T\omega_x\omega_y}]}.\qquad(6)$$

By combining Equations (6), (5) and (3), ACR becomes

$$ACR=\omega_yv\sqrt{2\ln[\frac{0.798P}{E_T\omega_yv}]}.\qquad(7)$$

Taking the derivative of Equation (7) with respect to the velocity and setting it equal to zero, one obtains the following expression for $v_{opt}$, the velocity at which the ACR is maximized:

$$v_{opt} = \frac{0.484P}{E_T \omega_y}.$$ (8)

Substituting $v_{opt}$ into Equation (7), the maximum ACR, $ACR_{max}$, is

$$ACR_{max} = \frac{0.484P}{E_T}.$$ (9)

Thus, for a Gaussian beam with power P, an exposure energy threshold $E_T$, and a known laser spot size and shape, the maximum ACR is proportional to the laser power and inversely related to the exposure threshold energy. Rewriting $ACR_{max}$ in terms of $v_{opt}$, one obtains

$$ACR_{max} = \omega_y v_{opt}.$$ (10)

Comparing Equations (10) and (6), the optimum area coverage rate is achieved at the velocity where the ablation track width is equal to the $1/e^2$ radius. This width corresponds to the locations on the beam where the peak intensity is about 60% (more exactly 60.7%) of the intensity at the center of the beam. The slope of the intensity profile is steepest at this level, thus making the width of the ablation track less sensitive to laser spot width variations.

One can compute the theoretical ratio of $ACR_{max}$ to the ACR calculated when the imaged track width is equal to the $1/e^2$ diameter (i.e., the point C in FIG. 2), which has 13.5% of the peak intensity in the Gaussian distribution). Assuming that the beam is circularly Gaussian, Equations (2), (3), (5), and (6) can be combined to give

$$ACR_{1/e^2} = 0.216 \frac{P}{E_T}.$$ (11)

Taking the ratio of $ACR_{max}$ in Equation (9) to $ACR_{1/e^2}$ in Equation (11) gives

$$\frac{ACR_{max}}{ACR_{1/e^2}} = 2.2.$$ (12)

Thus, by imaging to produce tracks with edges at the 60.7% intensity points (corresponding to the $1/e^2$ radius location) on the beam instead of the 13.5% intensity points (corresponds to the $1/e^2$ diameter location), the imaging time can be reduced by about a factor of 2. This is desirable because it helps to maximize the imaging speed while minimizing the overall laser power requirements.

For applications involving high resolution color proofing and film imagesetting, imaged line consistency is desirable. Using Equations (6) and (7),

$$l = 2y_T = \frac{ACR}{v} = 2 \sqrt{\frac{\omega_y^2}{2} \ln\left[\frac{0.798P}{E_T \omega_y v}\right]}.$$ (13)

the following expression for the imaged line width, l can be obtained:
The line width sensitivity derivatives $dl/dP$, $dl/dE_T$, and $dl/dw_y$ can be calculated from Equation (14), and are given as

$$\frac{dl}{dP} = \frac{\omega_y}{P \sqrt{2\ln\left[\frac{0.798P}{E_T v \omega_y}\right]}},$$ (14)

$$\frac{dl}{dE_T} = -\frac{\omega_y}{E_T \sqrt{2\ln\left[\frac{0.798P}{E_T v \omega_Y}\right]}},$$ (15)

$$\text{and } \frac{dl}{d\omega_y} = -\frac{1}{\sqrt{2\ln[\frac{0.798P}{E_T v\omega_y}]}} + \sqrt{2\ln[\frac{0.798P}{E_T v\omega_y}]}.\tag{16}$$

If P is 3 W, $w_y$ is 25 mm, $E_T$ is 0.1 J/cm2, and $V_{opt}$ is 5808 cm/s, which are the laser exposure conditions that might be used in a digital halftone graphic arts imagesetter for the invention described here, the derivatives of Equations (14) to (16) become

$$\frac{dl}{dP} = 8.3 \ \mu m/W,\tag{17}$$

$$\frac{dl}{dE_T} = -250\mu m/(J/cm^2),\tag{18}$$

$$\text{and } \frac{dl}{d\omega_y} = 0.\tag{19}$$

Equations (14) to (19) show that the 60.7% imaging condition results in low line width variations caused by laser beam spot size fluctuations, low laser power fluctuations, or low variations in threshold energy level.

Referring again to FIG. 1, preferably the zero order beam 7 emitted from the A/O modulator 6 passes by a first order beam stop (or blocker) 10 into a beam expander 12. The first order beam stop 10 is used for blocking the light (primarily the first order beam) that has been diffracted or scattered (shown by the arrowed dash line 5 in FIG. 1) by the A/O modulator so that such diffracted light will not propagate further to affect the ablation-transfer of the ATI medium. The undiffracted, zero order beam 7 is not blocked by the first order beam stop.

Optics can be used to adjust appropriately the size of the beam spot on the ATI medium. In the present preferred embodiment, A beam expander 12 (for example, MELLES GRIOT™ 59LBR510 Beam Expander), which operates as a reverse telescope, can be used to provide an appropriate beam size for which the scanner lens of the scanner is applicable. Such beam expanders are commercially available and known in the art for expanding a laser beam to a desired size. Further, the modulator can also have optics for adjusting the beam size in the modulator.

The resulting beam is then passed through a scanning system (or "scanner") 9 to scan the laser beam across the surface of the ATI medium along a substantially straight line, such as one on a flat surface to produce an ablated track. The scanner 9 can have a scanning mechanism such as a polygon mirror or a galvanometer with a mirror for directing and moving (or scanning) the laser beam across the surface of the ATI medium. The use and control of polygon mirrors for scanning on a medium is known in the art. For example, U.S. Patent No. 4,340,894 (Oono et al.) discloses a laser beam recording mechanism which utilizes a polygon mirror for directing a beam onto a film. Such a polygon mirror system can be adapted to be used in the present invention.

In the present invention, scanners using a galvanometer with a mirror to control the scanning of the laser beam is preferred over scanners using polygon mirrors. Scanners having polygon mirrors are relatively expensive and structurally complex. Air bearings are needed for the proper functioning of polygon mirrors, and optics adapted for correcting facet to facet errors to compensate for angular variation between facets of the polygon must be used.

Both linear galvanometers and resonant galvanometers can be used in the present invention to scan the zero order beam on an ATI medium. A linear galvanometer has a mirror rotational angle which is proportional to the input voltage it receives from a control mechanism, which can be computer-based, to control precisely the variation of the rotational angle with time. Such a linear galvanometer can be controlled to sweep in such a manner that the scan speed of the laser beam spot on the medium is constant across a desired portion of the scan field (i.e., the area of the medium coverable by the scanning laser beam spot). Such constant speed scanning can be accomplished, for example, by applying a ramp voltage signal to the linear galvanometer. An example of a linear galvanometer applicable in the present invention is CAMBRIDGE TECHNOLOGY™ Model 6650.

If other scan speed variations are desired, in the present invention the linear galvanometer can be controlled to result in such variations as long as an electrical signal of the appropriate waveform can be generated and passed to the linear galvanometer. For example, if a sinusoidal variation in the scan speed (or "sinusoidal scanning" hereafter) is desired, a signal of a sinusoidal waveform can be used to control the linear galvanometer to scan the laser beam spot at a speed with a sinusoidal variation (within the galvanometer response limits). Generally, sinusoidal scanning using a galvanometer results in less cross scan wobble of the scanned laser beam spot on the medium than nonsinusoidal scanning. Wobble is undesirable in ablation-transfer imaging because it may contribute to banding artifacts and moire in the resulting halftone image. Therefore, in the present invention sinusoidal scanning is preferred to improve the overall quality of the ablated tracks.

The present invention also preferably utilizes "resonant scanners" which are scanners that utilize mechanical resonance to produce sinusoidal speed variations. Such resonant scanners are typically faster than linear galvanometer scanners. Although such scanners cannot be used to scan a laser spot at a constant speed, they are more stable in that they exhibit less wobble in the scanned laser beam spot and can be operated at a higher overall oscillation frequency (and therefore scan speed) than the linear galvanometers.

When a resonant scanner (e.g., GENERAL SCANNING ISX series) or a linear galvanometer operating in a sinusoidal manner is used, the scan speed varies sinusoidally across the scan field according to the following equations. If the position of the galvanometer is

$$q = q_0 \sin(2\pi ft) \tag{20}$$

wherein $q_0$ is the zero-to-peak position distance from the center of scan position, f is the scanner oscillation frequency, and t is the time variable which is zero at the center of the scan, then the laser beam spot scan speed is

$$v = dq/dt = q_0\, 2\pi f \cos\,(2\pi ft)$$
$$= 2\pi\, q_o f \cos\,(2\pi ft) \tag{21}$$

The maximum scan speed occurs at the center (i.e., midscan) of the scan (where t = 0 and the scan angle Q = 0), and zero velocity occurs at the ends (i.e., the points at which the laser beam turns around to travel in the opposite scanning direction, corresponding to where $t = +t_1$ and $t = -t_1$; $Q = +Q_1$; and $Q = -Q_1$). Preferably, the galvanometer is caused to scan the laser beam bidirectionally such that image data is written on the recording medium (i.e., the ATI medium) in both scanning directions.

Because the ATI medium will ablate when a threshold level of energy has been absorbed, the scanner can be controlled so that ablated tracks with uniform desired width are formed on the ATI medium. If the material between desired tracks (either along a straight line in a scan or between different scans) is exposed to the laser beam and if the threshold level is exceeded, undesirable tracks may form. The use of a zero order beam for ablation-transfer-imaging of an ablatable material using an A/O modulator is particularly challenging since generally A/O modulators attenuate substantially less than 100% (generally 50% to 70%) of the zero order light when activated. It has been found that by using an apparatus adapted to result in an ablated track with a width of about the $1/e^2$ radius (as described above), desired tracks can be produced on the ATI medium without any accompanying undesired tracks while utilizing the laser beam energy efficiently.

Surprisingly, this can be achieved using a sinusoidally-scanning galvanometer according to this invention. The maximum scan speed at the center-of-scan (i.e., midscan), given in Equation (21), is equated with the optimal scan speed given in Equation (8). The parameters that are given include the maximum laser power at the image plane, P; the active scan length at the image plane (determined by scan lens), L; the zero-to-peak active scan angle, $Q_1$; the media exposure threshold (as described earlier), $E_T$; the $1/e^2$ radius, $w_y$; and the A/O modulator contrast ratio, R. The contrast ratio, R is equal to the ratio of the maximum power over the minimum power emitted from the modulator. The desired scanning parameters that must be selected include the zero-to-peak optical scanning angle, $Q_0$ and the sinusoidal scanning frequency, f. For finite R values, there exists a minimum scan speed, below which ablation will occur even when the A/O modulator is completely turned "on." Therefore, the value of $Q_0$ must be larger than $Q_1$ for finite R values so that the turn-around points (where the scan speed is zero) lie beyond either side of the active scan region. Using Equations (13) and (20), it can be shown that

$$\theta_0 = \frac{\theta_1}{\sqrt{1 - \left(\frac{1.65}{R}\right)^2}}. \tag{22}$$

Thus the value of $Q_0$ is selected based on $Q_1$ and the A/O modulator contrast ratio. The scanning frequency, f, is found by equating the optimal scan speed in Equation (8) with the maximum scan speed in Equation (21). The resulting frequency is given by:

$$f = \frac{0.484 P \theta_1}{\pi E_T \omega_y L \theta_0}. \tag{23}$$

The laser beam is modulated with the modulator (preferably A/O modulator) to keep the linear track width equal to about the $1/e^2$ radius as the laser beam spot is scanned across the ATI medium. In FIG. 1, this modulation is accomplished by sending a varying electrical signal as shown in FIG. 3 to the A/O modulator. Referring to FIG. 3, $V_0$ is the voltage applied to the A/O modulator at the center of the scan for ablation, at which point the zero order laser beam is not attenuated (i.e., the A/O modulator is not activated). On either side of the center of the scan toward the end of the scan, the voltage envelope $V_a(t)$ (corresponding to the voltage applied to the A/O modulator to cause ablation) gradually increases in a substantially sinusoidal fashion until $+t_1$ or $-t_1$, (corresponding to $+\theta_1$ or $-\theta_1$) is reached, at which point the appropriate voltage ($V_1$ or higher) is applied to the A/O modulator to attenuate fully (i.e., to achieve maximal attenuation) the zero order laser beam. To produce ablations corresponding to pixels during a scan, the voltage to the A/O modulator is switched between $V_1$ (i.e., the fully "on" mode corresponding to no ablation) and $V_a(t)$ (i.e., the voltage corresponding to ablation with the proper track width) wherein the value of $V_a(t)$ is dependent on the value of t. Because the scan speed is the fastest at t=0 and the slowest at $t_1$ and $-t_1$, the time intervals between consecutive ablation voltage switches are longer at +t and -t than at t=0. For clarity, the variation in time intervals is not shown in scale in FIG. 3. Such modulation of electrical signals to the A/O modulator can be used to produce laser beam spots of substantially equal size along the scan on both sides of the center of scan and thus result in ablated track(s) of substantially uniform width along the straight scan path. For example, for $+\theta_1$ and $-\theta_1$ of about $+25°$ and $-25°$ (optical angle), a sinusoidal electrical envelope signal to the A/O modulator corresponding to the sinusoidal scanning movement of the galvanometer will result in an ablated track of uniform width.

The sinusoidal electrical signals to the A/O modulator can be produced with a conventional signal generator. The variable dwell time data clock makes the image spot uniform. A mass memory system or a raster image processor (RIP) for controlling the cycling of the A/O modulator can be handled by one signal generator so that the length of each pixel is uniform. The intensity envelope modulation signal for controlling the varying intensity of the attenuated zero order beam can be controlled by a second signal generator. Once a specific waveform is selected for modulating an electrical signal, the programming of the signal generator can be done with methods known in the art. An A/O driver interface is used to add these signals together. Standard methods for accomplishing synchronization of the data to the galvanometer position are known in the art (for example, see D.G. Tweed, Lasers & Applications, pp. 65-69 Aug. 1985).

Referring again to FIG. 1, the laser beam scanned by a resonant galvanometer or linear galvanometer 14 (e.g., CAMBRIDGE TECHNOLOGY™, Model 6650) with a mirror is passed through a scan lens (or F-$\theta$ lens 18) to impinge on a flat field ablatable medium 20. Such a flat field ablatable medium can be, for example, a sheet of substrate coated with an ablatable layer mounted (or disposed) on a flat surface or on a drum. The sheet is mounted in such a way that the laser beam is scanned as a straight line across the flat surface or the length of the drum in a scan. The scan lens and the flat field medium are preferably arranged such that the angle and speed of scanning on both sides of the center of the scan have similar variations. Scan lenses that can be used for focusing a laser beam on a flat field medium are known in the art (e.g., see U.S. Patent No. 4,001,840 issued to Becker).

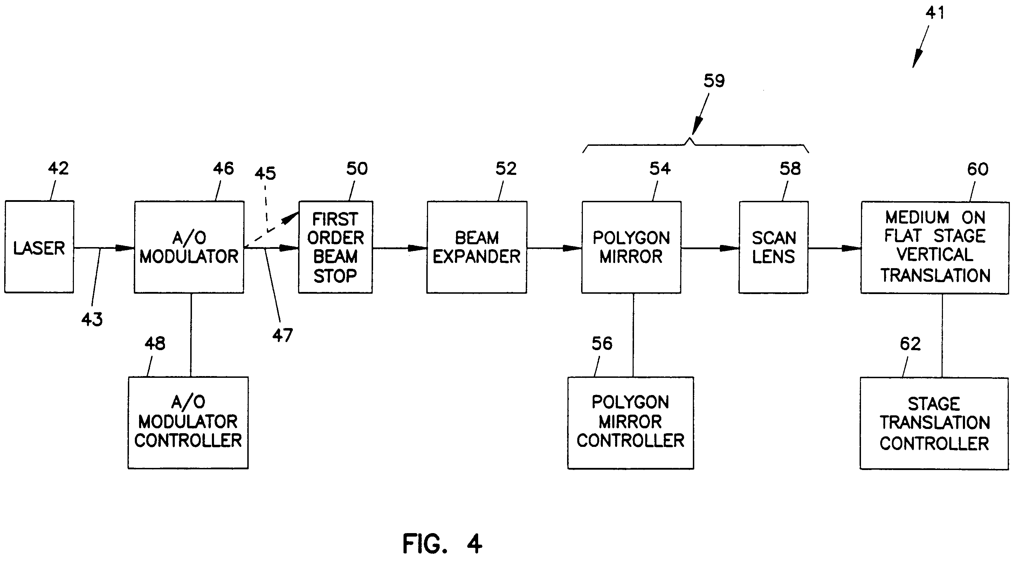

If a flat surface is used, the ATI medium can be arranged to be moved between scans so that after one scan the medium is advanced to a new position to expose fresh (unexposed) medium on the substrate to the laser beam in the next scan (e.g., on a vertical translation stage as in FIG. 4). Alternatively, the laser beam can be moved by a means such as another galvanometer to scan tracks along parallel straight lines on the medium without moving the medium. If a medium mounted on a cylindrical drum (such as one with a vacuum to secure the medium thereon) is used, after one scan, the drum (which is controlled by a drum controller in the embodiment of FIG. 1) can be rotated to advance to a new position so that a new scan can be done on fresh, unablated medium. Mechanisms applicable for achieving such drum movements are known in the art. Further, a means such as a light-beam blocker (or "beam stop") can be used at the end of the scan at the $+\theta_1$ or $-\theta_1$ positions so that the laser beam, if scanned past the $+\theta_1$ or $-\theta_1$ positions, is blocked and will not impinge on the medium to cause ablation. In this way, the time period required by the medium to be moved between scans will not result in undesired ablation.

Ablatable materials applicable for ablation-transfer imaging in this invention are known in the art. Descriptions of some ablatable materials useful in this invention can be found in, for example, U.S. Patent No. 5,126,760 (DeBoer), U.S. Patent No. 5,308,737 (Bills, et al.), and U.S. Patent No. 5,278,023 (Bills et al.), which descriptions are incorporated by reference herein.

Fig. 4 shows another embodiment of an apparatus for ablation-transfer imaging of the present invention. This embodiment utilizes a polygon mirror. A Nd:YAG laser (e.g., CVI LASER CORP., C-140 10 W TEM$_{oo}$ mode) 42 delivers a laser beam 43 through an A/O modulator 46. The zero order beam 47 emitting from the A/O modulator (e.g., ISOMET CORP.™, 1201E-1) passes by a first order beam stop 50 (which blocks the first order beam 45), through a beam expander (e.g., MELLES GRIOT™, 59LBR506) 52, and impinges on a polygon mirror (e.g., LINCOLN LASER™, M225-030-X10B4, 6-sided, VFC-2 Controller) 54, which scans the laser beam impinging thereon through a scan lens (e.g., RODENSTOCK™, 4401.302.021, focal length = 100mm) 58 onto a flat field medium 60. In FIG. 4, the scanner 59 contains the polygon mirror 59 and the scan lens 58. The flat field medium 60 is a medium mounted on a vertical translation state (e.g., NEWPORT CORP.™, stage 85OB-2-HS linear motor), which is controlled by a stage translation controller 62. The medium 60 is moved (or translated) so that parallel, ablated tracks can be formed thereon from scan to scan. The polygon mirror 54 is controlled so that a laser beam spot is scanned across the medium 60 at a constant speed. The A/O modulator 46 is controlled by a modulator controller 48 which includes an A/O driver that receives signals from a pulse generator for effecting the cyclical activation and deactivation of the A/O modulator 46.

## Operation of The Preferred Embodiment

The apparatus of the present invention can be used to produce desired ablation by modulating to attenuate the zero order laser beam so that the attenuated zero order beam has at least 10% of the unattenuated zero order beam intensity during maximal attenuation. Modulators with higher contrast ratios are more difficult to build than those with lower contrast ratios. Typically, in the case of an A/O modulator, the zero order beam is about 50% to 70% lower in intensity during maximal attenuation than the unattenuated zero order beam. This corresponds to about 30% to 50% of the unattenuated zero order beam not being diffracted by the activation of the modulator.

Because the peak optical intensity at the $1/e^2$ radius width of the laser beam spot is about 60% (more exactly 60.7%) that of the peak intensity at the center of the spot, if the scan speed is slower than the optimal scan speed corresponding to an ablated track width of the $1/e^2$ radius, an attenuated beam of 60% of full power (i.e. unattenuated beam) may not completely prevent undesirable ablation from occurring. Also, if a modulator with a maximal attenuation resulting in an attenuated beam of more than 60% of full power is used, the scan speed cannot be at the optimal level. To utilize efficiently the laser energy but not add substantially to the complexity and cost of the modulator, preferably the zero order beam intensity during maximal attenuation is about 20% to 50% of the unattenuated intensity.

To utilize the laser energy more efficiently, preferably the ablated tracks have edges at which the peak light intensity is about 40% to 70%, more preferably about 55% to 65%, and most preferably about 60% that of the peak intensity at the center of the Gaussian beam.

The embodiment shown in FIG. 4 was used to evaluate the formation of ablated tracks. The $1/e^2$ radius was determined by measuring the laser spot with a laser beam profiler (such as the PHOTON, INC™ Model 2180 scanning slit beam profiler) and fitting the beam profile data to Gaussian curves. The exposure threshold level of the ablatable material was measured by scanning the material, measuring the corresponding imaged line width, and calculating using Equation (13). The A/O modulator was operated in the zero order mode and exhibited a contrast ratio of 3:1 (contrast ratio=(power when A/O modulator off)/(power when A/O modulator on)). The maximum laser power on the film plane was 5W, the size of the Gaussian spot was 25 μm (full width at $I/e^2$, which means the perimeter of a 25 μm diameter spot has 13.5% peak intensity), and the spot scan speed could be varied from 2,000 to 17,125 cm/s. The minimum spot size was measured with a scanning slit laser beam profiler (PHOTON INC.™, Model 2180 with -NIR head and OPTION-O attenuator). Black donor material (COLOR LASERPROOF™ material, product code 3257, James River Graphics) was placed in vacuum contact with 3M™ 7600 paper and scanned with 2W (measured with SCIENTECH VECTOR™ calorimetric laser power meter) on the film plane at several scan speeds. The A/O modulator was pulsed with a 250 KHz square wave signal while the beam was scanned.

Micrographs of the imaged donor sheet show that the ablated tracks are wider as the scan speed is reduced. In addition, undesirable ablation begins to occur while the A/O modulator is activated as the scan speed is reduced. This is caused by an insufficient contrast ratio in the A/O modulator. Scanning at v=14,500 cm/s closely represents the optimum laser scanning conditions because the ablated line width is nearly equal to the $I/e^2$ laser spot radius and the maximum area coverage rate (ACR) is achieved.

The widths of the laser-ablated tracks were measured for each laser scan speed. The values for $\Delta t_{FWHM}$, $I_T$, and $E_T$ were calculated from Equations (3), (2), and (5) respectively. These calculated values, as well as the measured values of velocity (v) and track half width ($y_T$) are tabulated in TABLE A.

TABLE A

| Evaluation data | | | | |
|---|---|---|---|---|
| velocity (cm/s) | $y_T$ ($\mu$m) | $\Delta t_{FWHM}$ (ns) | $I_T$ calculated (W/cm$^2$) | $E_T$ calculated (J/cm$^2$) |
| 262 | 1 | 55 | 6.5 x 104 | 0.054 |
| 300 | 13. | 48 | 7.7 x 104 | 0.057 |
| 362 | 12. | 40 | 1.0 x 105 | 0.061 |
| 425 | 11. | 34 | 1.6 x 105 | 0.081 |
| 525 | 10. | 27 | 1.8 x 105 | 0.076 |
| 687 | 9. | 21 | 2.6 x 105 | 0.082 |
| 737 | 9. | 19 | 2.9 x 105 | 0.086 |
| 806 | 9. | 18 | 2.9 x 105 | 0.079 |
| 887 | 8.7 | 16 | 3.1 x 105 | 0.076 |
| 975 | 8. | 15 | 3.6 x 105 | 0.081 |
| 1100 | 7.7 | 13 | 3.8 x 105 | 0.076 |
| 1262 | 7. | 11 | 4.4 x 105 | 0.076 |
| 1450 | 6. | 10 | 4.8 x 105 | 0.072 |
| 1712 | 5. | 8 | 5.4 x 105 | 0.070 |

The $I_T$ and $\Delta t_{FWHM}$ values are graphically represented in FIG. 5. In addition, a fixed threshold energy curve based on Equation (5) is also plotted for $E_T$=0.051 J/cm$^2$. In FIG. 5 (also in FIG.6), the evaluation data are plotted as square blocks and the theoretical derived numbers based on a fixed exposure energy threshold level ($E_T$) of 0.051 J/cm$^2$ are plotted as a curved line. The data are located close to the curve except at the lower threshold intensity values where the laser spot was not Gaussian. The ablated regions on the medium correspond to peak intensities and dwell times located above the curve.

FIG. 6 shows a plot of the measured ACR for various linear scan speeds. The dashed curve in FIG. 6 represents a plot of Equation (6) for the evaluation conditions, assuming $E_T$=0.051 J/cm2. The ACR evaluation data are in good agreement with the theoretical values in FIG. 6. For $E_T$=0.051 J/cm$^2$, $v_{opt}$ is 15,322 cm/s according to Equation (8), which closely matches the data shown in FIG. 6.

The embodiment shown in FIG. 1 was also evaluated. The results also show that optimal use of laser beam energy occurs when the ablated tracks have a width such that the laser beam intensity at the edges of the tracks is about 60% of the peak laser beam spot intensity at the center of the spot (i.e., the width is equal to about the $1/e^2$ radius). Ablated tracks of uniform width without undesirable ablation occurring between the desirable tracks were obtained. The results show that the relation of dwell time versus peak threshold intensity as in FIG. 5 and the relation of ACR to scan speed as in FIG. 6 also apply to the embodiment of FIG. 1.

The present invention has been described in the foregoing specification. The embodiments are presented for illustrative purpose and are not to be interpreted as unduly limiting the scope of the invention. It is to be understood that modifications and alterations of the invention, especially in size and shape, will be apparent to those skilled in the art without departing from the spirit and scope of the invention.

**Claims**

1. An apparatus for ablation-transfer-imaging an ablation transfer imaging medium comprising a substrate having an ablation transfer layer with exposure threshold of ablation, the apparatus comprising:

    (a) a continuous wave, solid state laser for emitting a continuous laser beam;

    (b) a modulator for attenuating the intensity of the laser beam passing undiffracted through the modulator to emit therefrom an undiffracted beam of attenuated intensity when the modulator is in an attenuating mode of operation and an undiffracted beam of unattenuated intensity when the modulator is in a nonattenuating mode of operation such that an undiffracted beam is continuously emitted from the modulator; and

(c) a scanner adapted to scan the undiffracted beam from the modulator across the medium in a straight path at a varying linear speed to produce a pattern of desired ablated tracks on the medium.

2. The apparatus according to claim 1 wherein the modulator is an acousto-optic (A/O) modulator such that a diffracted beam is emitted therefrom when the laser beam is attenuated.

3. The apparatus according to claims 1 or 2 wherein the modulator is adapted to attenuate the intensity of the undiffracted beam during the maximal attenuation in the attenuating mode of operation to result in an intensity of less than 50% of the undiffracted beam in the nonattenuating mode of operation.

4. The apparatus according to claim 1, wherein the apparatus is adapted to result in only desired ablation tracks along a linear line as long as the undiffracted beam directed to the medium during the maximal attenuation in the attenuating mode of operation of the modulator has less than 60% of the intensity of the undiffracted beam during the nonattenuating mode of operation of the modulator.

5. The apparatus according to claim 1, wherein the apparatus is adapted to produce a desired ablated track having lengthwise edges, the peak intensity at the lengthwise edges being 40 to 70% of the peak intensity at the center of the track.

6. The apparatus according to claims 1, 2, 3 or 5, wherein the scanner comprises a galvanometer for sweeping the undiffracted beam onto the medium along a linear path.

7. The apparatus according to claim 1, 2 or 5, wherein the modulator is adapted to result in an attenuated undiffracted beam that varies in intensity either (a) along the scan path when not maximally attenuated, or (b) sinusoidally in a scan when not maximally attenuated.

8. The apparatus according to claim 1, wherein the scanner comprises a mirror that sweeps the undiffracted beam onto a concave surface of the medium facing the beam.

9. An apparatus for ablation-transfer-imaging a medium having an exposure threshold of ablation, comprising:

(a) a diode pumped Nd:YAG laser for emitting a laser beam with a generally Gaussian intensity distribution;

(b) an acousto-optic modulator for modulating the laser beam to emit therefrom a diffracted beam and an undiffracted beam, the undiffracted beam during maximal modulation at mid-scan having 20% to 50% of the intensity of an undiffracted beam when the modulator is unactivated, such that an undiffracted beam is continuously emitted from the modulator, said modulator being adapted to result in an attenuated undiffracted beam that varies in intensity with time when not maximally attenuated;

(c) a blocker for blocking the first order beam;

(d) a beam expander for expanding the zero order beam emitting from the modulator;

(e) an arrangement for a flat field medium to be mounted thereon; and

(f) a scanner comprising a resonant galvanometer and a scanner lens adapted for directing the undiffracted beam onto the medium along a linear path parallel to the axis of the drum to produce a track pattern of desired ablated tracks having lengthwise edges, the peak intensity at the lengthwise edges being from 55% to 65% of the peak intensity at the center of the track.

10. A method for ablation-transfer-imaging a flat field medium having an exposure threshold of ablation, comprising:

(a) continuously emitting a laser beam;

(b) modulating the laser beam to produce an undiffracted beam, the intensity of the undiffracted beam being attenuated in an attenuating mode of modulation and unattenuated at a nonattenuating mode of modulation such that an undiffracted beam continuously results; and

(c) directing and scanning the continuous undiffracted beam across the medium at a varying linear speed to produce a track pattern of desired ablated tracks on the medium.

11. The method according to claim 10 wherein the modulation is a result of using an acousto-optical modulator wherein a diffracted beam is emitted therefrom, along with the undiffracted beam during the attenuating mode of operation, and the desired ablated track has lengthwise edges, the scanning being at a speed such that the peak intensity at the lengthwise edges of a track is 50% to 70% of the peak intensity at the center of the track, and the ablated track has a width equal to the $1/e^2$ radius of the undiffracted beam at mid scan.

12. The method according to claim 11 wherein during maximal attenuation in the attenuating mode of modulation, the undiffracted beam has 20% to 50% of the intensity of the undiffracted beam in the nonattenuating mode of modulation at mid-scan.

13. The method according to claims 11 or 12, wherein a continuous-wave diode pumped laser is used for emitting the laser beam.

14. A method for ablation-transfer-imaging a flat field medium having an exposure threshold of ablation, comprising:

(a) emitting a laser beam from a continuous-wave diode pumped Nd:YAG laser;

(b) modulating the laser beam with an acousto-optical modulator to produce an undiffracted beam during a first mode of modulation, and to produce an attenuated, undiffracted beam along with a diffracted beam during a second mode of modulation, the attenuated, undiffracted beam when under maximal attenuation during the first mode of modulation having 20% to 50% at mid-scan of the intensity of the undiffracted beam during the second mode of modulation;

(c) blocking the first order beam; and

(d) using a resonant galvanometer and a scanner lens to direct and scan the undiffracted beam across the flat field medium at a varying linear speed along a linear path on the medium to produce a track pattern of desired ablated tracks having lengthwise edges, the scanning being at a speed such that the peak intensity at the lengthwise edge of a track is 50% to 70% of the peak intensity at the center of the track;

wherein the attenuated undiffracted beam varies in intensity along the scan path when not maximally attenuated.

FIG. 1

2 LASER → 4 ISOLATOR → 3 → 6 A/O MODULATOR → 10 FIRST ORDER BEAM STOP → 12 BEAM EXPANDER → 14 GALVANO-METER → 18 SCAN LENS → 20 MEDIUM ON DRUM

5, 7 — A/O MODULATOR

9 — GALVANO-METER, SCAN LENS

1

8 A/O MODULATOR CONTROLLER

16 GALVANO-METER CONTROLLER

22 DRUM CONTROLLER

LASER SPOT
MOVING WITH
SPEED V

T

F

A

GAUSSIAN LASER
BEAM INTENSITY
PROFILE
DISTRIBUTION

B

D

C

Y

X

FIG. 2

VOLTAGE OF
SIGNAL TO
A/O MODULATOR

$V_1$

$V_a(t)$

$-t_1$

$t=0$ $V_0$

$+t_1$

TIME OF SCAN (t)

FIG. 3

FIG. 4

EP 0 708 550 A2

FIG. 5

FIG. 6